# EUROPÄISCHE PATENTANMELDUNG

(11) **EP 1 039 271 A2**
(43) Veröffentlichungstag der Anmeldung: **27.09.2000**
(21) Anmeldenummer: 00105494.9
(22) Anmeldetag: 15.03.2000
(51) Int. Cl.: G01F 23/24, G01F 23/22, G05D 7/06

(54) **Füllstandsregelung für Flüssigkeiten in Druckbehältern**

(30) Priorität: 19.03.1999 DE 19912487; 20.05.1999 DE 19923241
(71) Anmelder: Linde Technische Gase GmbH, 82049 Höllriegelskreuth (DE)
(72) Erfinder: Klane, Bernd, Dipl.-Ing., 81243 München (DE); Praller, Andreas, Dipl.-Ing., 82515 Wolfratshausen (DE); Hildebrandt, Peter, Dr.-Ing., 85402 Kranzberg (DE)
(74) Vertreter: Kasseckert, Rainer

(57) **Zusammenfassung**

Die Erfindung betrifft ein Verfahren und eine Vorrichtung zur Ermittlung des Füllstands einer Flüssigkeit in einem Behälter (1). Der Behälter (1) ist mit mindestens zwei Temperatursensoren (T1, T2) ausgestattet und mit einem Medium befüllt, das sich zu einem Teil in der flüssigen Phase und zu einem Teil in der gasförmigen Phase befindet Die Temperatursensoren (T1, T2) sind so positioniert, daß sich mindestens ein Temperatursensor (T1) an dem Niveau befindet, an dem die Ermittlung des Füllstands durchgeführt wird und mindestens ein Temperatursensor (T2) an einer Stelle im Behälter (1) angebracht wird, an der sichergestellt ist, daß der Temperatursensor (T2) von Flüssigkeit umgeben ist Die Differenz der Meßwerte der Temperatursensoren (T1) und (T2) wird mit einem festgelegten Sollwert verglichen. Dieser Vergleich erlaubt es, Rückschlüsse auf den Unterschied in der Wärmeleitfähigkeit des die Sensoren (T1, T2) umgebenden Mediums zu ziehen, und auf diese Weise den Füllstand zu bestimmen. Mit Hilfe dieses Vergleichs und einer geeigneten Meß- und/oder Regeleinrichtung (2) kann der Füllstand bestimmt, gemessen und/oder geregelt werden. Die Erfindung eignet sich insbesondere auch zur Messung und/oder Regelung des Füllstands kryogener Flüssigkeiten, beispielsweise flüssigen Stickstoffs, in Druckbehältern bei tiefen Temperaturen.

## Beschreibung

Die Erfindung betrifft ein Verfahren zur Ermittlung des Füllstands einer Flüssigkeit in einem Behälter, der ein Medium enthält, das sich zu einem Teil in der flüssigen Phase und zu einem Teil in der gasförmigen Phase befindet, sowie eine Vorrichtung zur Durchführung des Verfahrens.

Die Ermittlung des Füllstands einer Flüssigkeit in einem Behälter zu Kontroll- und Regelzwecken stellt eine bei technischen Anwendungen häufig auftretende Aufgabe dar. Es kommen zahlreiche Meßmethoden zum Einsatz, die jedoch im Hinblick auf ihr Einsatzgebiet und ihre Genauigkeit zum Teil stark eingeschränkt sind.

Zur Füllstandskontrolle und -regelung sind beispielsweise Schwimmersysteme verbreitet, die jedoch eine hohe Störanfälligkeit aufweisen. Eine andere Meßmethode basiert auf der Ermittlung der Druckdifferenz zwischen dem Bodenbereich und dem Kopfbereich eines Behälters. Die Genauigkeit dieser Methode ist jedoch oftmals nicht hinreichend, da beispielsweise eine starke Temperaturabhängigkeit der Meßwerte besteht. In Behältern, in denen Umgebungsdruck herrscht, besteht die Möglichkeit, den Füllstand durch einen Temperatursensor zu ermitteln, da der flüssige Anteil eines Mediums, das sich zu einem Teil in der flüssigen Phase und zu einem Teil in der gasförmigen Phase befindet und unter Umgebungsdruck steht, immer kälter ist als die Gasphase. Bei Behältern, die siedende Flüssigkeit enthalten, wird der Phasenzustand an der Meßstelle daran erkannt, ob der Temperatursensor an der Meßstelle eine Temperatur größer oder kleiner der Siedetemperatur des Mediums anzeigt. In einem mit einer siedenden Flüssigkeit befüllten Behälter, der unter einem Druck größer als der Umgebungsdruck steht, kann diese Methode nicht eingesetzt werden, da sich die Siedetemperatur mit dem Druck ändert und mit Füllstandsschwankungen auch Druckschwankungen auftreten. Außerdem stellt sich in einem derartig befüllten Behälter mit der Zeit ein Gleichgewichtszustand zwischen der flüssigen und der gasförmigen Phase ein. Bei Behältern, deren Inhalt unter einem höheren Druck steht als der Umgebungsdruck können dagegen kapazitive Meßmethoden eingesetzt werden. Weist der Behälter jedoch einen hohen Druck und tiefe Temperaturen auf, stößt diese Methode auf Schwierigkeiten, da sich die erhältlichen Sensoren nicht für tiefe Temperaturen eignen und in diesem Bereich nicht eingesetzt werden können. Darüber hinaus treten bei kapazitiven Messungen große Fehler auf, wenn der kalte Sensor in den Gasraum eintritt und Kondensation an der Oberfläche des Sensors stattfindet.

Die Ermittlung des Füllstands einer Flüssigkeit, die unter hohem Druck steht und sehr kalt ist, beispielsweise einer kryogenen Flüssigkeit, führt mit herkömmlichen Methoden zu Ergebnissen, die mit zum Teil großen Meßfehlem behaftet sind.

Der vorliegenden Erfindung liegt die Aufgabe zugrunde, ein Verfahren und eine Vorrichtung zur Ermittlung des Füllstands einer Flüssigkeit in einem Behälter zur Verfügung zu stellen, die für technische Anwendungen ausreichend genaue Ergebnisse liefern, auch und gerade wenn die Messungen bei kryogenen Flüssigkeiten vorgenommen werden.

Diese Aufgabe wird erfindungsgemäß verfahrensseitig dadurch gelöst, daß zur Ermittlung des Füllstands mindestens zwei Temperatursensoren im Behälter eingesetzt werden, von denen mindestens ein Temperatursensor T1 an dem Niveau eingesetzt wird, an dem die Ermittlung des Füllstands durchgeführt wird und mindestens ein Temperatursensor T2 an einer Stelle im Behälter angebracht ist, an der sichergestellt ist, daß der Temperatursensor T2 von Flüssigkeit umgeben ist Zur Ermittlung des Füllstands werden die an den Temperatursensoren gemessenen Werte mit einem Sollwert verglichen.

Der Vergleich mit einem Sollwert wird vorzugsweise auf folgende Weise durchgeführt: Die Differenz der Meßwerte der Temperatursensoren wird mit einem festgelegten Sollwert verglichen, der aus dem Bereich 0.5 bis 50 Kelvin in Abstimmung mit dem eingesetzten Medium und der geforderten Genauigkeit ausgewählt wird. Insbesondere erweist sich in der Praxis ein Sollwert zwischen 1 und 20 Kelvin als besonders geeignet Zur Ermittlung des Füllstands einer kryogenen Flüssigkeit wird bevorzugt ein Sollwert von 2 Kelvin herangezogen. Stellt sich bei dem Vergleich des Sollwerts mit der gemessenen Temperaturdifferenz heraus, daß die Temperaturdifferenz größer als der Sollwert ist, liegt der Füllstand auf einem niedrigeren Niveau als der Temperatursensor T1. Ergibt sich bei dem Vergleich, daß die Temperaturdifferenz kleiner ist als der Sollwert, so liegt der Füllstand auf dem Niveau von Temperatursensor T1 oder darüber.

Gemäß einer bevorzugten Ausführungsform der Erfindung wird eine Meß- und /oder Regeleinrichtung eingesetzt, die die Differenz der Meßwerte mit dem Sollwert vergleicht und den Füllstand des Behälters mißt und/oder regelt. Zur Messung des Füllstands wird der Temperatursensor T1 vorzugsweise vertikal beweglich gestaltet so daß nach einer erfolgten Messung in Abhängigkeit davon, ob die Differenz der Meßwerte größer oder kleiner als der Sollwert ist, der Temperatursensor nach oben oder unten bewegt werden kann, um dort erneut zu messen. Durch wiederholtes Ausführen dieser Schritte kann die Höhe des Füllstands der Flüssigkeit im Behälter ermittelt werden. Eine in der Praxis jedoch häufiger auftretende Aufgabe besteht in der Regelung des Füllstands, wobei sich die Eingangswerte für eine Regelung aus den Vergleichen der Meßwerte mit dem festgelegten Sollwert ergeben.

Eine bevorzugte Ausführungsform der Füllstandsregelung hat zum Ziel, den Füllstand in einem Behälter konstant zu halten. Der Temperatursensor T1 wird dabei auf dem gewünschten Füllstand-Niveau positioniert. Vorteilhafterweise stehen mindestens ein Ventil, sowie mindestens ein Flüssigkeitsreservoir zur Verfügung. Sinkt der Flüssigkeitsspiegel unter das gewünschte Füllstand-Niveau ab, bewirkt die Regeleinrichtung ein Nachfüllen von Flüssigkeit aus dem Reservoir. Erreicht der Flüssigkeitsspiegel das vorgegebene Niveau, unterbricht die Regeleinrichtung den Zustrom der Flüssigkeit

Besonders bevorzugt kommen als Temperatursensoren Widerstandsthermometer zum Einsatz. Beispielhaft seien hier Pt-100-Widerstandsthermometer genannt.

In einer anderen vorteilhaften Ausführungsform der Erfindung werden als Temperatursensoren Thermoelemente eingesetzt.

Eine Weiterbildung des Verfahrens sieht vor, daß die Temperatursensoren zumindest zeitweise beheizt werden. Vorteilhafterweise wird durch lokales Zuführen von Wärme und Messung der sich einstellenden Temperatur die Wärmeleitfähigkeit des den Sensor umgebenden Mediums ermittelt. Die Wärmezufuhr kann beispielsweise von einer außerhalb des Behälters angebrachten Heizeinrichtung entlang der Zuführung für die Temperatursensoren erfolgen. Durch den Vergleich von mindestens zwei Meßstellen wird ermittelt, ob sich das Medium an beiden Stellen im gleichen Phasenzustand, beispielsweise flüssig, oder an den beiden Meßstellen in verschiedenen Phasenzuständen befindet. Die Wärmeleitfähigkeit der flüssigen Phase eines Mediums unterscheidet sich in der Regel deutlich von der Wärmeleitfähigkeit der gasförmigen Phase dieses Mediums. Durch die Fixierung der Meßstelle T2 in Flüssigkeit ist es möglich eindeutig zu bestimmen, ob das Medium am Meßpunkt T1 flüssig oder gasförmig vorliegt.

Besonders bevorzugt werden beheizte Temperatursensoren eingesetzt, die aus Widerstandsthermometern zusammengesetzt sind. Vorteilhafterweise werden dabei je ein konventionell betriebenes Widerstandsthermometer und je ein in unmittelbarer Nachbarschaft angeordnetes Widerstandsthermometer, das unter Ausnutzung der an einem Widerstand auftretenden Wärmeentwicklung heizt, zu einem Temperatursensor mit Heiz- und Meßfunktion kombiniert.

Gemäß einer weiteren Ausführungsform der Erfindung werden beheizte Temperatursensoren eingesetzt, die aus Thermoelementen zusammengesetzt sind. Vorteilhafterweise werden dabei je ein konventionell betriebenes Thermoelement und je ein in unmittelbarer Nachbarschaft angeordnetes Thermoelement, das von einem höheren Strom durchflossen wird, zu einem Temperatursensor mit Heiz- und Meßfunktion kombiniert. Die Heizfunktion wird von den mit höherem Strom als bei konventioneller Betriebsart durchflossenen Thermoelementen, unter Ausnutzung des Peltier-Effekts, übernommen.

Eine andere Möglichkeit besteht darin, die Meß- und Heizfunktion in je einem Thermoelement oder einem Widerstandsthermometer pro Temperatursensor zu verwirklichen, indem die wärmeabgebenden Thermoelemente oder Widerstandsthermometer auch zur Messung der Werte eingesetzt werden.

Nach einer weiteren Ausgestaltung der Erfindung wird der Behälter, der das Medium enthält, auf einem höheren Druck als dem Umgebungsdruck gehalten.

Die Erfindung eignet sich insbesondere zur Füllstandsmessung bei kryogenen Flüssigkeiten. In diesem Fall wird der Behälter mit einer kryogenen Flüssigkeit, z.B. flüssigem Stickstoff, befüllt.

Zur Durchführung des Verfahrens ist eine Vorrichtung zur Ermittlung des Füllstands einer Flüssigkeit in einem Behälter vorgesehen, wobei der Behälter ein Medium enthält, das sich zu einem Teil in der flüssigen Phase und zu einem Teil in der gasförmigen Phase befindet.

Vorrichtungsseitig wird die gestellte Aufgabe dadurch gelöst, daß die Vorrichtung mindestens zwei Temperatursensoren aufweist, von denen mindestens ein Temperatursensor T1 an dem Niveau angebracht ist, an dem sich das gewünschte Füllstand-Niveau befindet, und mindestens ein Temperatursensor T2 an einer Stelle im Behälter befestigt ist, an der sichergestellt ist, daß der Temperatursensor T2 von Flüssigkeit umgeben ist.

Zur Ermittlung des Füllstands erweist es sich als zweckmäßig, daß die Vorrichtung eine Meß- und/oder Regeleinrichtung aufweist, die den Füllstand aufgrund der Meßwerte der Temperatursensoren mißt und/oder regelt.

Auch erweist es sich als vorteilhaft, daß eine Weiterbildung der Vorrichtung eine Regeleinrichtung sowie mindestens ein Ventil und mindestens ein Flüssigkeitsreservoir aufweist, um den Füllstand auf einem vorgegebenen Niveau zu halten. Auf der Höhe dieses Niveaus ist erfindungsgemäß der Temperatursensor T1 befestigt.

Gemäß einer besonders bevorzugten Ausführungsform der Vorrichtung sind Widerstandsthermometer, insbesondere Pt-100-Widerstandsthermometer, als Temperatursensoren eingebaut.

Gemäß einer anderen zweckmäßigen Ausführungsform der Vorrichtung sind Thermoelemente als Temperatursensoren vorgesehen.

Als besonders vorteilhaft erweisen sich Temperatursensoren, die aus je zwei Widerstandsthermometern bestehen, die jeweils aus einem konventionell betriebenen Widerstandsthermometer und aus einem in unmittelbarer Nachbarschaft angeordneten Widerstandsthermometer, das unter Ausnutzung der an einem Widerstand auftretenden Wärmeentwicklung heizt zusammengesetzt sind.

In einer anderen Ausführungsform erweisen sich Temperatursensoren als zweckmäßig, die aus je zwei Thermoelementen bestehen, die jeweils aus einem konventionell betriebenen Thermoelement und aus einem in unmittelbarer Nachbarschaft angeordneten Thermoelement, das mit einem höheren Strom betrieben unter Ausnutzung des Peltier-Effekts heizt, zusammengesetzt sind.

Eine andere vorteilhafte Ausgestaltung der Erfindung sieht vor, daß für je einen Temperatursensor je ein Widerstandsthermometer eingebaut ist. Das Widerstandsthermometer, insbesondere ein Pt-100-Widerstandsthermometer, heizt unter Ausnutzung der an einem stromdurchflossenen Widerstand auftretenden Wärmeentwicklung und ermittelt Meßwerte. Bei einem Pt-100-Widerstandsthermometer stellt eine Wendel aus Platin den Widerstand dar.

Eine weitere Möglichkeit besteht darin, daß für je einen Temperatursensor je ein Thermoelement eingebaut ist, das unter Ausnutzung des Peltier-Effekts heizt und Meßwerte ermittelt.

Eine Weiterbildung der Vorrichtung sieht vor, daß der eingesetzte Behälter druckfest und/oder isoliert ausgeführt ist.

Es empfiehlt sich, den Temperatursensor T1 mit einem Hüllrohr zu umgeben, das den Temperatursensor vor Flüssigkeitsspritzern schützt. Insbesondere bei einer Befüllung des Behälters mit heftig siedenden Flüssigkeiten sichert die Ausstattung mit einem derartigen Hüllrohr einen störungsfreien Betrieb der Vorrichtung zur Füllstandsmessung und/oder -regelung

Mit der Erfindung werden ein Verfahren und eine Vorrichtung zur Ermittlung, Messung und Regelung, des Füllstands einer Flüssigkeit in einem Behälter zur Verfügung gestellt. Dabei bietet die Erfindung eine ganze Reihe von Vorteilen:

Im Gegensatz zu herkömmlichen Verfahren und Vorrichtungen zur Ermittlung des Füllstands stellt die Erfindung eine präzise Meßmethode dar, die die Messung und/oder Regelung des Füllstands auch von kryogenen Flüssigkeiten, insbesondere von flüssigem Stickstoff, problemlos ermöglicht Diese Füllstandskontrolle liefert unabhängig vom Systemdruck, der in dem befüllten Behälter herrscht, zuverlässige Werte und kann in jedem technisch relevanten Temperaturbereich eingesetzt werden. Sie besteht aus einfachen, robusten und kostengünstigen Bauteilen und ist in der Lage, den Füllstand mit hoher Genauigkeit zu ermitteln. Darüber hinaus kann die Erfindung mit sehr gutem Erfolg zur Füllstandsregelung eingesetzt werden. Durch Integration der Füllstandskontrolle in einen Regelkreis, der den Füllstand nach Zielvorgaben, wie beispielsweise das Konstanthalten des Füllstands, regelt erhält die Erfindung einen sehr weiten Einsatzbereich bei einer Vielzahl von technischen Anwendungen.

Im folgenden soll die Erfindung anhand von in den Figuren schematisch dargestellten Ausführungsbeispielen näher erläutert werden. Es zeigen:
Figur 1 eine Skizze eines Behälters mit Füllstandsregelung,
Figur 2 eine Skizze eines Behälters mit einer Variante der Füllstandsregelung.

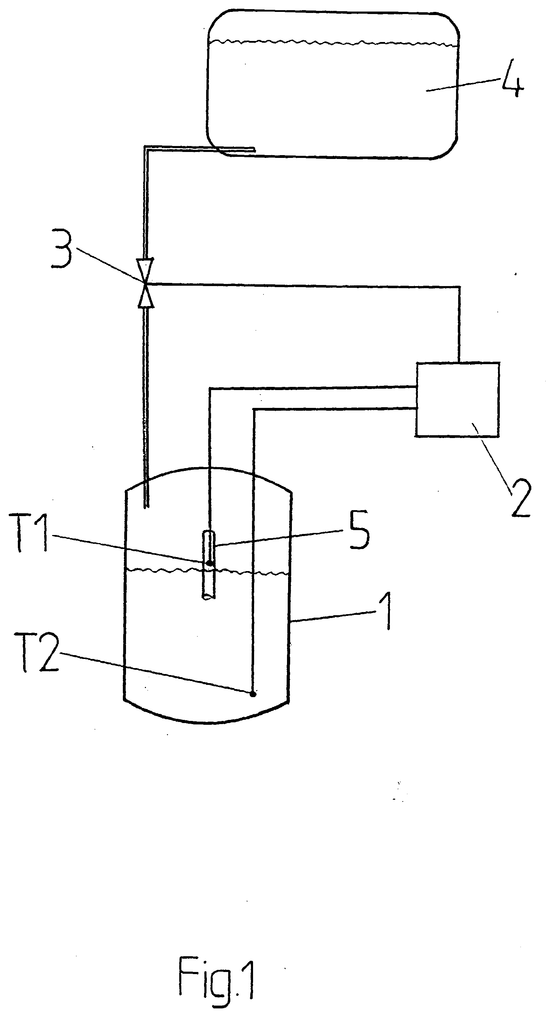

In Figur 1 ist ein Behälter 1 mit zwei Temperatursensoren T1 und T2 zur Füllstandskontrolle sowie damit verbundener Meß- und Regeleinrichtung 2 mit Ventil 3 und Flüssigkeitsreservoir 4 dargestellt. Der Behälter ist mit einer Flüssigkeit befüllt, beispielsweise mit flüssigem Stickstoff. Die Druck und Temperaturverhältnisse im Behälter ermöglichen, daß der Stickstoff als siedende Flüssigkeit im Behälter vorliegt. Die Regelung hat in diesem Ausführungsbeispiel zum Ziel, den Füllstand in dem Behälter auf einem wählbaren Niveau konstant zu halten. Dazu wird der Temperatursensor T1 auf Höhe des gewählten Niveaus positioniert und mit einem ihn umgebenden Hüllrohr 5 ausgestattet das den Temperatursensor T1 vor Flüssigkeitsspritzern schützt. Sinkt der Flüssigkeitsspiegel unter das Niveau von T1 ab, überschreitet das Ergebnis des Vergleichs der Temperaturdifferenz zwischen Meßpunkt T1 und Meßpunkt T2 den Sollwert. Bei Überschreitung des Sollwerts steuert die Meß- und Regeleinrichtung 2 das Ventil 3 an und öffnet es, so daß Flüssigkeit aus dem Reservoir 4 in den Behälter fließt Erreicht der Flüssigkeitsspiegel wieder das gewählte Niveau, verringert sich die Differenz der Meßwerte an den Temperatursensoren T1 und T2 auf einen Wert kleiner als der Sollwert. Bei einer Unterschreitung des Sollwerts sorgt die Meß- und Regeleinrichtung 2 dafür, daß das Ventil 3 geschlossen wird. Der Zustrom von Flüssigkeit ist solange unterbrochen bis die Differenz der Temperaturwerte an T1 und T2 den Sollwert erneut überschreitet. Der Füllstand der Flüssigkeit im Behälter wird auf diese Weise konstant gehalten.

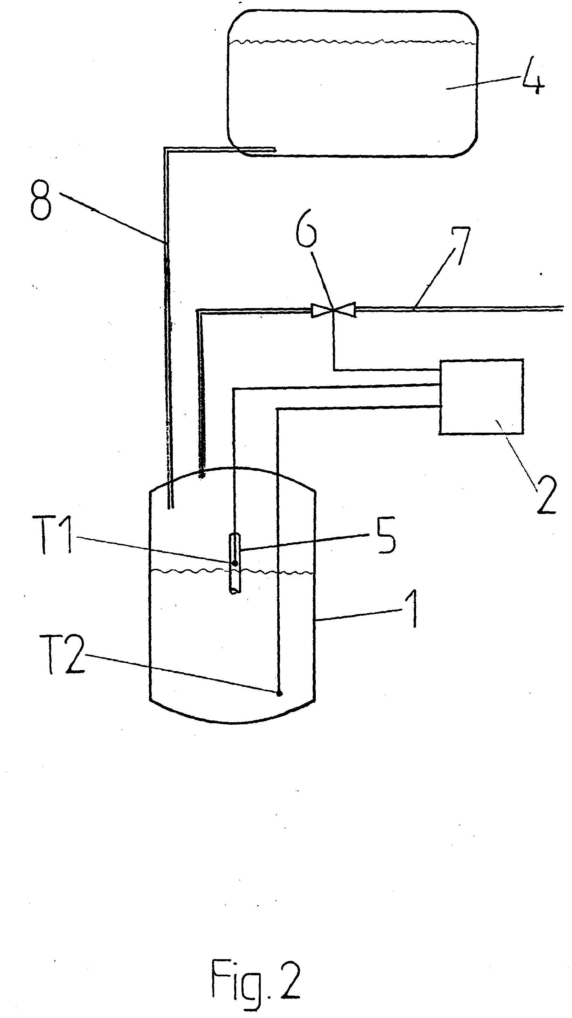

In Figur 2 ist ein Behälter 1 mit zwei Temperatursensoren T1 und T2 zur Füllstandskontrolle sowie damit verbundener Meß- und Regeleinrichtung 2 und Flüssigkeitsreservoir 4 dargestellt. Abweichend vom vorangegangenen Beispiel ist in diesem Ausführungsbeispiel die Flüssigkeitszuleitung 8, die das Flüssigkeitsreservoir 4 mit dem Behälter 1 verbindet, immer offen. Die anderen Eigenschaften, wie beispielsweise Druck, Temperaturverhältnisse im Behälter, Anordnung der Temperatursensoren und Ziel der Regelung entsprechen im wesentlichen denen im vorher beschriebenen Ausführungsbeispiel 1 (Figur 1). Im Unterschied dazu greift die Regelung in diesem Beispiel an anderer Stelle in die Anlage ein: Im Gasauslaß 7 ist ein Ventil 6 vorgesehen, das durch die Meß- und Regeleinrichtung 2 angesteuert wird. Die Regelung arbeitet nach dem im Ausführungsbeispiel 1 beschriebenen Prinzip. Bei geöffnetem Ventil 6 fließt Flüssigkeit über die Flüssigkeitszuleitung 8 in den Behälter 1. Durch Schließen des Ventils 6 kommt der Zufluß der Flüssigkeit zum Erliegen. Der Zustrom von Flüssigkeit ist so lange unterbrochen, bis die Meßwerte an den Temperatursensoren T1 und T2 gemäß dem Prinzip der Regelung erneut eine Ansteuerung und Öffnung des Ventils 6 auslösen. Insbesondere erweist sich der Einsatz eines Magnetventils als Ventil 6 als vorteilhaft. Auch in diesem Ausführungsbeispiel wird der Temperatursensor T1 durch ein Hüllrohr 5 vor Flüssigkeitsspritzern geschützt.

## Patentansprüche

1. Verfahren zur Ermittlung des Füllstands einer Flüssigkeit in einem Behälter (1), der ein Medium enthält, das sich zu einem Teil in der flüssigen Phase und zu einem Teil in der gasförmigen Phase befindet, **dadurch gekennzeichnet, daß** mindestens zwei Temperatursensoren (T1, T2) im Behälter eingesetzt werden, von denen mindestens ein Temperatursensor (T1) an dem Niveau eingesetzt wird, an dem die Ermittlung des Füllstands durchgeführt wird und mindestens ein Temperatursensor (T2) an einer Stelle im Behälter angebracht wird, an der sichergestellt ist, daß der Temperatursensor (T2) von Flüssigkeit umgeben ist, wobei die Meßwerte der Temperatursensoren (T1, T2) zur Ermittlung des Füllstands mit einem Sollwert verglichen werden.

2. Verfahren nach Anspruch 1, dadurch gekennzeichnet daß der Sollwert als Differenz der Meßwerte der Temperatursensoren (T1, T2) im Bereich von 0.5 bis 50 Kelvin, insbesondere 1 bis 20 Kelvin, festgesetzt wird, wobei bei einer Temperaturdifferenz größer als der Sollwert der Zustand des Mediums am Ort des Temperatursensors (T1) als gasförmig, und bei einer Temperaturdifferenz kleiner als der Sollwert der Zustand des Mediums am Ort des Temperatursensors (T1) als flüssig ermittelt wird.

3. Verfahren nach einem der Ansprüche 1 oder 2, dadurch gekennzeichnet, daß zur Auswertung der Temperaturdifferenz eine Meß- und/oder Regeleinrichtung (2) eingesetzt wird, die die Meßwerte mit dem Sollwert vergleicht, und den Füllstand des Behälters (1) durch geeignete Maßnahmen mißt und/oder regelt.

4. Verfahren nach Anspruch 3, dadurch gekennzeichnet daß eine Regeleinrichtung (2) eingesetzt wird, die den Füllstand des Behälters (1) auf einem vorgegebenen Niveau hält, wobei der Temperatursensor (T1) auf Höhe des vorgegebenen Niveaus lokalisiert wird, und bei Absinken des Flüssigkeitsspiegels unter dieses Niveau die Regeleinrichtung (2) ein Nachfüllen von Flüssigkeit aus einem Reservoir (4) bewirkt, und bei Erreichen des vorgegebenen Niveaus den Zustrom der Flüssigkeit unterbricht.

5. Verfahren nach einem der Ansprüche 1 bis 4, dadurch gekennzeichnet daß als Temperatursensoren (T1, T2) Widerstandsthermometer, insbesondere Pt-100-Widerstandsthermometer, eingesetzt werden.

6. Verfahren nach einem der Ansprüche 1 bis 4, dadurch gekennzeichnet, daß als Temperatursensoren (T1, T2) Thermoelemente eingesetzt werden.

7. Verfahren nach einem der Ansprüche 1 bis 6, dadurch gekennzeichnet, daß die Temperatursensoren (T1, T2) zumindest zeitweise beheizt werden, wobei durch die Differenz der an den Temperatursensoren (T1, T2) gemessenen Werte der Unterschied in der Wärmeleitfähigkeit des umgebenden Mediums ermittelt wird.

8. Verfahren nach Anspruch 7, dadurch gekennzeichnet daß die Beheizung der Temperatursensoren (T1, T2) und die Messung der Werte mit Temperatursensoren (T1, T2), die je zwei Widerstandsthermometer enthalten, mit je einem konventionell betriebenen Widerstandsthermometer und je einem in unmittelbarer Nachbarschaft angeordneten Widerstandsthermometer, das unter Ausnutzung der an einem Widerstand auftretenden Wärmeentwicklung heizt, durchgeführt werden.

9. Verfahren nach Anspruch 7, dadurch gekennzeichnet daß die Beheizung der Temperatursensoren (T1, T2) und die Messung der Werte mit Temperatursensoren (T1, T2), die je zwei Thermoelemente enthalten, mit je einem konventionell betriebenen Thermoelement und je einem in unmittelbarer Nachbarschaft angeordneten Thermoelement, das mit einem höheren Strom betrieben unter Ausnutzung des Peltier-Effekts heizt, durchgeführt werden.

10. Verfahren nach Anspruch 7, dadurch gekennzeichnet daß für je einen Temperatursensor (T1, T2) je ein Widerstandsthermometer eingesetzt wird, das unter Ausnutzung der an einem Widerstand auftretenden Wärmeentwicklung heizt und Meßwerte ermittelt.

11. Verfahren nach Anspruch 7, dadurch gekennzeichnet daß für je einen Temperatursensor (T1, T2) je ein Thermoelement eingesetzt wird, das unter Ausnutzung des Peltier-Effekts heizt und Meßwerte ermittelt.

12. Verfahren nach einem der Ansprüche 1 bis 11, dadurch gekennzeichnet, daß der Behälter (1), der das Medium enthält, auf einem höheren Druck als dem Umgebungsdruck gehalten wird.

13. Verfahren nach einem der Ansprüche 1 bis 12, dadurch gekennzeichnet daß der Behälter (1) mit einer kryogenen Flüssigkeit befüllt wird.

14. Verfahren nach einem der Ansprüche 1 bis 13, dadurch gekennzeichnet, daß als kryogene Flüssigkeit Stickstoff eingesetzt wird.

15. Vorrichtung zur Ermittlung des Füllstands einer Flüssigkeit in einem Behälter (1), der ein Medium enthält das sich zu einem Teil in der flüssigen Phase und zu einem Teil in der gasförmigen Phase befindet, **dadurch gekennzeichnet, daß** der Behälter (1) mit mindestens zwei Temperatursensoren (T1, T2) ausgestattet ist, von denen mindestens ein Temperatursensor (T1) an dem Niveau angebracht ist, an dem sich das gewünschte Füllstand-Niveau befindet, und mindestens ein Temperatursensor (T2) an einer Stelle im Behälter befestigt ist, an der sichergestellt ist, daß der Temperatursensor (T2) von Flüssigkeit umgeben ist.

16. Vorrichtung nach Anspruch 15, dadurch gekennzeichnet, daß die Vorrichtung eine Meß- und/oder Regeleinrichtung (2) aufweist, die den Füllstand nach den Meßwerten der Temperatursensoren (T1, T2) mißt und/oder regelt.

17. Vorrichtung nach Anspruch 15 oder 16, dadurch gekennzeichnet, daß die Vorrichtung eine Regeleinrichtung (2) und mindestens ein Ventil (3) und mindestens ein Flüssigkeitsreservoir (4) aufweist, um den Füllstand auf einem vorgegebenen Niveau zu halten, wobei der Temperatursensor (T1) auf Höhe des vorgegebenen Niveaus befestigt ist.

18. Vorrichtung nach einem der Ansprüche 15 bis 17, dadurch gekennzeichnet daß Widerstandsthermometer, insbesondere Pt-100-Widerstandsthermometer, als Temperatursensoren (T1, T2) vorgesehen sind.

19. Vorrichtung nach einem der Ansprüche 15 bis 17, dadurch gekennzeichnet, daß Thermoelemente als Temperatursensoren (T1, T2) vorgesehen sind.

20. Vorrichtung nach Anspruch 18, dadurch gekennzeichnet, daß die Temperatursensoren (T1, T2) aus je zwei Widerstandsthermometern bestehen, die jeweils aus einem konventionell betriebenen Widerstandsthermometer und aus einem in unmittelbarer Nachbarschaft angeordneten Widerstandsthermometer, das unter Ausnutzung der an einem Widerstand auftretenden Wärmeentwicklung heizt, zusammengesetzt sind.

21. Vorrichtung nach Anspruch 19, dadurch gekennzeichnet, daß die Temperatursensoren (T1, T2) aus je zwei Thermoelementen bestehen, die jeweils aus einem konventionell betriebenen Thermoelement und aus einem in unmittelbarer Nachbarschaft angeordneten Thermoelement, das mit einem höheren Strom betrieben unter Ausnutzung des Peltier-Effekts heizt, zusammengesetzt sind.

22. Vorrichtung nach Anspruch 18, dadurch gekennzeichnet, daß für je einen Temperatursensor (T1, T2) je ein Widerstandsthermometer vorgesehen ist, das unter Ausnutzung der an einem Widerstand auftretenden Wärmeentwicklung heizt und Meßwerte ermittelt.

23. Vorrichtung nach Anspruch 19, dadurch gekennzeichnet, daß für je einen Temperatursensor (T1, T2) je ein Thermoelement vorgesehen ist, das unter Ausnutzung des Peltier-Effekts heizt und Meßwerte ermittelt.

24. Vorrichtung nach einem der Ansprüche 15 bis 23, dadurch gekennzeichnet, daß der eingesetzte Behälter (1) druckfest und/oder isoliert ausgeführt ist.

25. Vorrichtung nach einem der Ansprüche 15 bis 24, dadurch gekennzeichnet, daß die Vorrichtung ein Hüllrohr (5) aufweist, das den Temperatursensor (T1) vor Flüssigkeitsspritzern schützt.
